# EUROPEAN PATENT APPLICATION

(11) **EP 4 510 599 A1**
(43) Date of publication of application: **19.02.2025**
(21) Application number: 22937535.7
(22) Date of filing: 12.04.2022
(51) Int. Cl.: H04N 21/4782, H04N 21/422, H04N 21/431, H04N 21/485, H04N 21/81, H04N 21/858

(54) **DISPLAY DEVICE**

(71) Applicant: LG Electronics Inc., Yeongdeungpo-gu Seoul 07336 (KR)
(72) Inventor: SON, Chulmin, Seoul 06772 (KR)
(74) Representative: Schornack, Oliver
(86) International application number: PCT/KR2022/005274
(87) International publication number: WO 2023/200022

(57) **Abstract**

A display device according to an embodiment disclosed herein may comprise: a user interface which communicates with a display and a remote control device; and a controller. The controller: receives an app execution request from the remote control device; converts settings parameters of a Web App into running parameters for running a web browser, the conversion being made in response to the received request; executes the web browser on the basis of the converted running parameters; and displays a web page of the Web App on the display through the executed web browser.

## Description

### [Technical Field]

The present disclosure relates to a display device, and more particularly, to a display device that executes an app through a web browser.

### [Background Art]

There are over 100 million websites in the world, and many users are using the websites. Users can use various services such as news, community, games, and shopping through the websites.

The disadvantage of web browsers is that you have to drive the web browser every time you want to access the site. To improve this, Progressive Web App (PWA) technology, which uses web browsers as an App Runtime, is gradually being utilized.

PWA technology uses a web browser as an App Runtime, but allows the user to use the desired website functions immediately when the app is executed, without the user needing to recognize whether they are using a web browser or driving a native app.

The problem is that adding a PWA type to an existing platform requires adding a new app type to the existing platform, and the app store must also add a new app type in response, which causes a major change.

Additionally, various restrictions, such as security, that existing app types had should be reviewed for application to new PWAs.

### [Disclosure]

### [Technical Problem]

An object of the present disclosure is to utilize existing app types, app execution and deployment environments as they are, but to actually have a web browser execute the app.

An object of the present disclosure is to add Progressive Web Apps without changing the platform and app stores.

### [Technical Solution]

A display device according to an embodiment of the present disclosure may include a display; a user interface that performs communication with a remote control device; and a controller that receives an app execution request from the remote control device, converts setting parameters of a web app into driving parameters for driving a web browser according to the received request, executes the web browser based on the converted driving parameters, and displays a web page of the web app on the display through the executed web browser.

A method for operating a display device according to an embodiment of the present disclosure may include receiving an app execution request from a remote control device; converting setting parameters of a web app into driving parameters for driving a web browser according to the received request; executing a web browser based on the converted driving parameters; and displaying a web page of the web app through the executed web browser.

### [Advantageous Effect]

According to various embodiments of the present disclosure, there is an advantage in that Progressive Web Apps can be deployed to lower platforms simply by updating a web browser without changing the platform and App Store.

In addition, it has the advantage of being able to utilize existing platform App Types' installation, security verification, and other resources.

Additionally, new Progressive Web Apps can become readily available.

### [Description of Drawings]

Fig. 1 is a block diagram illustrating a configuration of a display device according to an embodiment of the present disclosure.
Fig. 2 is a block diagram illustrating a remote control device according to an embodiment of the present disclosure.
Fig. 3 is a view illustrating an actual configuration of a remote control device according to an embodiment of the present disclosure.
Fig. 4 is a view illustrating an example of utilizing a remote control device according to an embodiment of the present disclosure.
FIG. 5 is a view for explaining an operating method of a display device according to an embodiment of the present disclosure.
FIG. 6 is a view illustrating a manifest file of a web app including setting parameters of a web app according to one embodiment of the present disclosure.
FIG. 7 is a view for explaining the operation of a web browser engine according to one embodiment of the present disclosure.
FIG. 8 is a view explaining an example in which a web page of a web app is added to a tab list on a web browser screen when an app is selected on a home screen according to a prior art, and FIG. 9 is a view explaining an example in which a separate web page is displayed without adding a new tab when an app is selected on a home screen according to an embodiment of the present disclosure.
FIG. 10 is a view illustrating a communication process between a display device and a server providing an app service according to one embodiment of the present disclosure.
FIG. 11 is a view explaining handling when two web browser apps are driven simultaneously in multi-view according to one embodiment of the present disclosure.

### [Best Mode]

Hereinafter, embodiments relating to the present disclosure will be described in detail with reference to the accompanying drawings. The suffixes "module" and "unit" for components used in the description below are assigned or mixed in consideration of easiness in writing the specification and do not have distinctive meanings or roles by themselves.

A display device according to an embodiment of the present disclosure is an intelligent display device that adds a computer-assisted function to, for example, a broadcast reception function, and while remaining faithful to the broadcast reception function, adds an Internet function or the like and may have a more convenient interface such as a manual input device, a touch screen, or a space remote control. In addition, with the support of wired or wireless Internet functions, it is possible to connect to the Internet and a computer, and perform functions such as email, web browsing, banking, or games. A standardized general-purpose OS may be used for these various functions.

Accordingly, the display device described in the present disclosure may perform various user-friendly functions, for example, since various applications may be freely added or deleted on a general-purpose OS kernel. More specifically, the display device may be, for example, a network TV, an HBBTV, a smart TV, an LED TV, an OLED TV, or the like and in some cases, may also be applied to a smartphone.

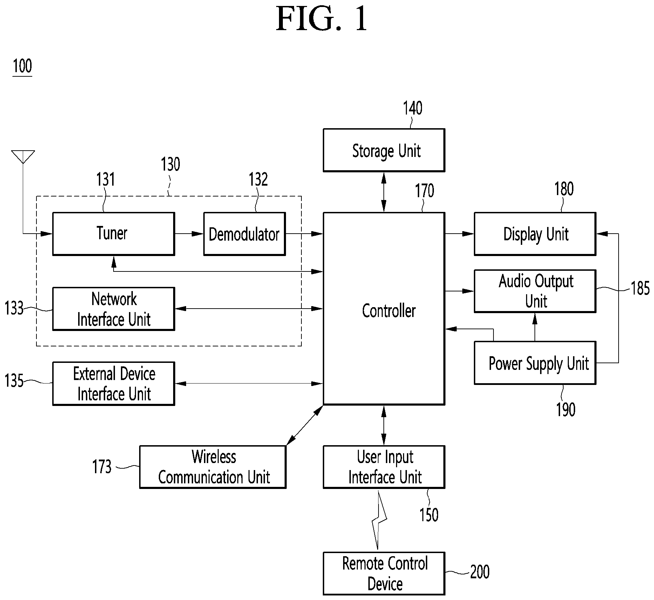

Fig. 1 is a block diagram illustrating a configuration of a display device according to an embodiment of the present disclosure.

Referring to Fig. 1, a display device 100 may include a broadcast reception part 130, an external device interface 135, a memory 140, a user input interface 150, a controller 170, a wireless communication interface 173, a display 180, a speaker 185, and a power supply circuit 190.

The broadcast reception part 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulator 132 may divide the received broadcast signals into image signals, audio signals, and broadcast program-related data signals, and may restore the divided image signals, audio signals, and data signals into an output available form.

The external device interface 135 may receive an application or an application list in an adjacent external device and deliver the application or the application list to the controller 170 or the memory 140.

The external device interface 135 may provide a connection path between the display device 100 and an external device. The external device interface 135 may receive at least one of an image or audio outputted from an external device that is wirelessly or wiredly connected to the display device 100 and deliver the received image or the audio to the controller. The external device interface 135 may include a plurality of external input terminals. The plurality of external input terminals may include an RGB terminal, at least one High Definition Multimedia Interface (HDMI) terminal, and a component terminal.

An image signal of an external device inputted through the external device interface 135 may be outputted through the display 180. A sound signal of an external device inputted through the external device interface 135 may be outputted through the speaker 185.

An external device connectable to the external device interface 135 may be one of a set-top box, a Blu-ray player, a DVD player, a game console, a sound bar, a smartphone, a PC, a USB Memory, and a home theater system but this is just exemplary.

The network interface 133 may provide an interface for connecting the display device 100 to a wired/wireless network comprising internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface 133 may access a predetermined webpage through an accessed network or another network linked to the accessed network. In other words, the network interface 133 may transmit or receive data to or from a corresponding server by accessing a predetermined webpage through the network.

The network interface 133 may receive content or data provided from a content provider or a network operator. In other words, the network interface 133 may receive content, such as movies, advertisements, games, VODs, and broadcast signals, which are provided from the content provider or the network operator, and information relating thereto through the network.

In addition, the network interface 133 may receive firmware update information and update files provided from the network operator, and may transmit data to the Internet or content provider or the network operator.

The network interface 133 may select and receive a desired application among applications open to the air, through network.

The memory 140 may store signal-processed image, voice, or data signals stored by a program in order for each signal processing and control in the controller 170.

In addition, the memory 140 may perform a function for temporarily storing image, voice, or data signals output from the external device interface 135 or the network interface 133, and may store information on a predetermined image through a channel memory function.

The memory 140 may store an application or an application list input from the external device interface 135 or the network interface 133.

The display device 100 may play content files (e.g., video files, still image files, music files, document files, application files, etc.) stored in the memory 140, and may provide the content files to a user.

The user input interface 150 may transmit signals input by a user to the controller 170, or may transmit signals from the controller 170 to a user. For example, the user input interface 150 may receive or process control signals such as power on/off, channel selection, and screen setting from the remote control device 200 or transmit control signals from the controller 170 to the remote control device 200 according to various communication methods such as Bluetooth, Ultra Wideband (WB), ZigBee, Radio Frequency (RF), and IR communication methods.

In addition, the user input interface 150 may transmit, to the controller 170, control signals input from local keys (not illustrated) such as a power key, a channel key, a volume key, and a setting key.

Image signals that are image-processed by the controller 170 may be input to the display 180 and displayed as images corresponding to the image signals. In addition, image signals that are image-processed by the controller 170 may be input to an external output device through the external device interface 135.

Voice signals processed by the controller 170 may be output to the speaker 185. In addition, voice signals processed by the controller 170 may be input to the external output device through the external device interface 135.

Additionally, the controller 170 may control overall operations of the display device 100.

In addition, the controller 170 may control the display device 100 by a user command or an internal program input through the user input interface 150, and may access the network to download a desired application or application list into the display device 100.

The controller 170 may output channel information selected by a user together with the processed image or voice signals through the display 180 or the speaker 185.

In addition, the controller 170 may output image signals or voice signals of an external device such as a camera or a camcorder, which are input through the external device interface 135, through the display 180 or the speaker 185, according to an external device image playback command received through the user input interface 150.

Moreover, the controller 170 may control the display 180 to display images, and may control the display 180 to display broadcast images input through the tuner 131, external input images input through the external device interface 135, images input through the network interface, or images stored in the memory 140. In this case, an image displayed on the display 180 may be a still image or video and also may be a 2D image or a 3D image.

Additionally, the controller 170 may play content stored in the display device 100, received broadcast content, and external input content input from the outside, and the content may be in various formats such as broadcast images, external input images, audio files, still images, accessed web screens, and document files.

Moreover, the wireless communication interface 173 may perform wired or wireless communication with an external device. The wireless communication interface 173 may perform short-range communication with an external device. For this, the wireless communication interface 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication interface 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication interface 173 may detect (or recognize) a wearable device capable of communication around the display device 100.

Furthermore, if the detected wearable device is a device authenticated to communicate with the display device 100, the controller 170 may transmit at least part of data processed in the display device 100 to the wearable device through the wireless communication interface 173. Therefore, a user of the wearable device may use the data processed by the display device 100 through the wearable device.

The display 180 may convert image signals, data signals, or on-screen display (OSD) signals, which are processed in the controller 170, or images signals or data signals, which are received in the external device interface 135, into R, G, and B signals to generate driving signals.

Furthermore, the display device 100 illustrated in Fig. 1 is just one embodiment of the present disclosure and thus, some of the components illustrated may be integrated, added, or omitted according to the specification of the actually implemented display device 100.

In other words, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike Fig. 1, the display device 100 may receive images through the network interface 133 or the external device interface 135 and play them without including the tuner 131 and the demodulator 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to Fig. 1, an image processing device such as the separated set-top box, and a content playback device including the display 180 and the speaker 185.

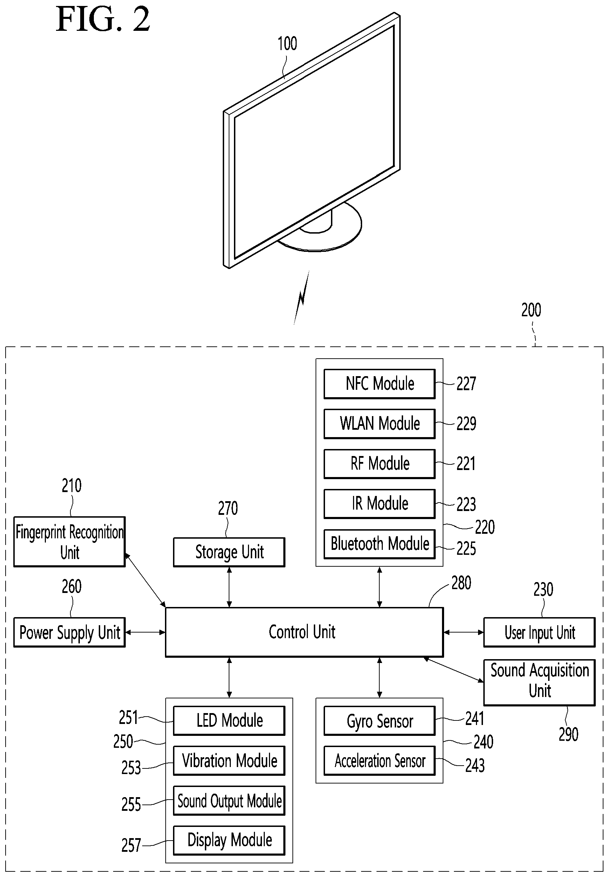

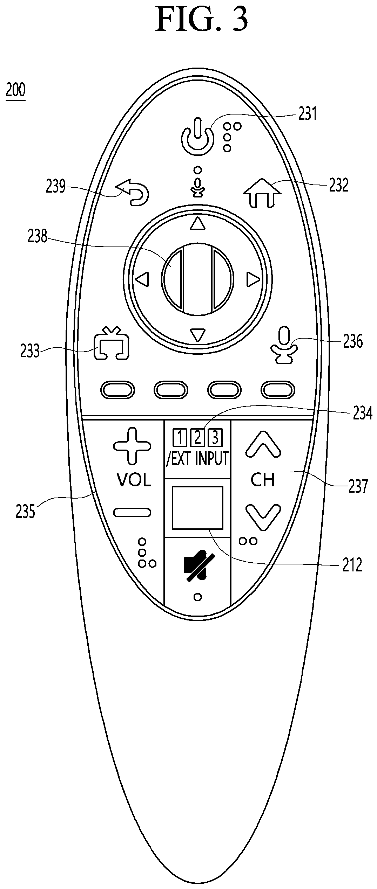

A remote control device according to an embodiment of the present disclosure will be described with reference to Figs. 2 and 3.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 may include a fingerprint recognition device 210, a wireless communication interface 220, a user input interface 230, a sensor 240, an output interface 250, a power supply circuit 260, a memory 270, a controller 280, and a microphone 290.

Referring to Fig. 2, the wireless communication interface 220 transmits/receives signals to/from an arbitrary any one of display devices according to the above-mentioned embodiments of the present disclosure.

The remote control device 200 may include a radio frequency (RF) circuit 221 capable of transmitting or receiving signals to or from the display device 100 according to an RF communication standard, and an IR circuit 223 capable of transmitting or receiving signals to or from the display device 100 according to an IR communication standard. In addition, the remote control device 200 may include a Bluetooth circuit 225 capable of transmitting or receiving signals to or from the display device 100 according to a Bluetooth communication standard. In addition, the remote control device 200 may include an NFC circuit 227 capable of transmitting or receiving signals to or from the display device 100 according to an NFC communication standard, and a wireless LAN (WLAN) circuit 229 capable of transmitting or receiving signals to or from the display device 100 according to a WLAN communication standard.

In addition, the remote control device 200 may transmit signals containing information on the movement of the remote control device 200 to the display device 100 through the wireless communication interface 220.

Moreover, the remote control device 200 may receive signals transmitted from the display device 100 through the RF circuit 221 and if necessary, may transmit a command for power on/off, channel change, and volume change to the display device 100 through the IR circuit 223.

The user input interface 230 may be configured with a keypad, a button, a touch pad, or a touch screen. A user may operate the user input interface 230 to input a command relating to the display device 100 to the remote control device 200. If the user input interface 230 includes a hard key button, a user may input a command relating to the display device 100 to the remote control device 200 through the push operation of the hard key button. This will be described with reference to Fig. 3.

Referring to Fig. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation.

The power button 231 may be a button for turning on/off the power of the display device 100.

The home button 232 may be a button for moving to the home screen of the display device 100.

The live button 233 may be a button for displaying live broadcast programs.

The external input button 234 may be a button for receiving an external input connected to the display device 100.

The volume control button 235 may be a button for controlling a volume output from the display device 100.

The voice recognition button 236 may be a button for receiving user's voice and recognizing the received voice.

The channel change button 237 may be a button for receiving broadcast signals of a specific broadcast channel.

The OK button 238 may be a button for selecting a specific function, and the back button 239 may be a button for returning to a previous screen.

Fig. 2 is described again.

If the user input interface 230 includes a touch screen, a user may touch a soft key of the touch screen to input a command relating to the display device 100 to the remote control device 200. In addition, the user input interface 230 may include various kinds of input interfaces operable by a user, for example, a scroll key and a jog key, and this embodiment does not limit the scope of the present disclosure.

The sensor 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display 180 of the display device 100.

The output interface 250 may output image or voice signals in response to the operation of the user input interface 230, or may output image or voice signals corresponding to signals transmitted from the display device 100.

A user may recognize whether the user input interface 230 is operated or the display device 100 is controlled through the output interface 250.

For example, the output interface 250 may include an LED 251 for flashing, a vibrator 253 for generating vibration, a speaker 255 for outputting sound, or a display 257 for outputting an image, if the user input interface 230 is manipulated or signals are transmitted/received to/from the display device 100 through the wireless communication interface 220.

Additionally, the power supply circuit 260 supplies power to the remote control device 200 and if the remote control device 200 does not move for a predetermined time, stops the power supply, so that power waste may be reduced.

The power supply circuit 260 may resume the supply of power if a predetermined key provided at the remote control device 200 is operated.

The memory 270 may store various kinds of programs and application data required to control or operate the remote control device 200.

If the remote control device 200 transmits/receives signals wirelessly through the display device 100 and the RF circuit 221, the remote control device 200 and the display device 100 transmits/receives signals through a predetermined frequency band.

The controller 280 of the remote control device 200 may store, in the memory 270, information on a frequency band for transmitting/receiving signals to/from the display device 100 paired with the remote control device 200 and refer to it.

The controller 280 controls general matters relating to the control of the remote control device 200. The controller 280 may transmit a signal corresponding to a predetermined key operation of the user input interface 230 or a signal corresponding to the movement of the remote control device 200 sensed by the sensor 240 to the display device 100 through the wireless communication interface 220.

In addition, the microphone 290 of the remote control device 200 may acquire voice.

A plurality of microphones 290 may be provided.

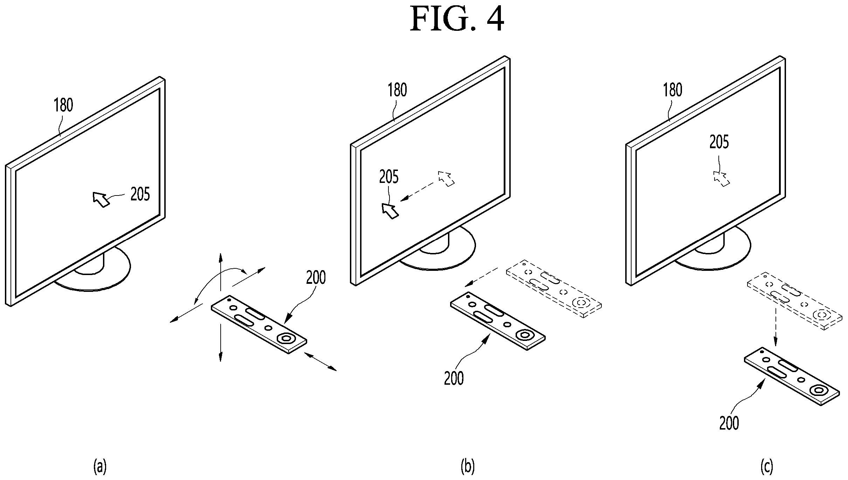

Next, Fig. 4 is described.

Fig. 4 is a view illustrating an example of utilizing a remote control device according to an embodiment of the present disclosure.

Fig. 4(a) illustrates that a pointer 205 corresponding to the remote control device 200 is displayed on the display 180.

A user may move or rotate the remote control device 200 vertically or horizontally. The pointer 205 displayed on the display 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

Fig. 4(b) illustrates that if a user moves the remote control device 200, the pointer 205 displayed on the display 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

Fig. 4(c) illustrates that while a specific button in the remote control device 200 is pressed, a user moves the remote control device 200 away from the display 180. Thus, a selected region in the display 180 corresponding to the pointer 205 may be zoomed in and displayed in an enlarged size.

On the other hand, if a user moves the remote control device 200 close to the display 180, a selection area in the display 180 corresponding to the pointer 205 may be zoomed out and displayed in a reduced size.

On the other hand, if the remote control device 200 is moved away from the display 180, a selection area may be zoomed out and if the remote control device 200 is moved closer to the display 180, a selection area may be zoomed in.

Additionally, if a specific button in the remote control device 200 is pressed, recognition of a vertical or horizontal movement may be excluded. In other words, if the remote control device 200 is moved away from or closer to the display 180, the up, down, left, or right movement maynot be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display 180 and also may be displayed in correspondence to a plurality of points such as a line and a surface.

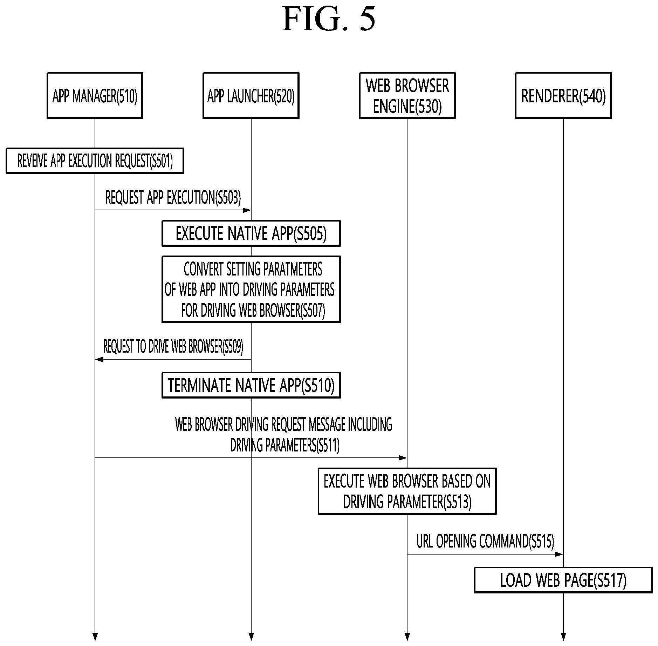

FIG. 5 is a view for explaining an operating method of a display device according to an embodiment of the present disclosure.

Hereinafter, an app manager 510, an app launcher 520, a web browser engine 530, and a renderer 540 may be components included in the controller 170.

However, this is only an example and the app manager 510, the app launcher 520, the web browser engine 530 and the renderer 540 may each be separate processors from the controller 170.

Hereinafter, it is assumed that the app manager 510, the app launcher 520, the web browser engine 530, and the renderer 540 are included in the controller 170.

Referring to FIG. 5, the app manager 510 receives an app execution request (S501) and transmits the received app execution request to the app launcher 520 (S503).

In one embodiment, the app manager 510 can recognize a command to select an app icon included in the home launcher (or home screen) as an app execution request.

The app execution request may be a request to execute a native app created in the platform's environment (or in a native environment).

The user input interface 150 of the display device 100 can receive a selection command of an app icon from a remote control device 200 and transmit the received selection command to the app manager 510.

The app manager 510 can select an appropriate runtime and assign the selected runtime to the app.

A runtime may be a code library used by a compiler or virtual machine to manage the application.

The app launcher 520 executes a native app in response to an app execution request (S505) and converts the setting parameters of the web app into driving parameters for driving a web browser (S507).

Web apps can be named as Progressive Web Apps (PWA). Web apps can be applications that drive through a web browser.

The app launcher 520 can obtain setting parameters of a web app corresponding to a native app that has received an execution request, and convert the obtained setting parameters into driving parameters suitable for the environment of a web browser engine 530 installed in the display device 100.

In one embodiment, the conversion process may be a process of converting the setting parameters into driving parameters for driving a web browser and changing the values of the driving parameters.

The driving parameters and the setting parameters can consist of identical or similar variables.

In another example, the conversion process might be the process of changing the values of setting parameters of a web app.

The app launcher 520 can parse the setting parameters of the web app and match each of the driving parameters of the web browser to each of the parsed setting parameters.

The app launcher 520 can convert values corresponding to each of the setting parameters to suit the OS environment of the display device 100 or the environment of the web browser engine 530.

In one embodiment, the setting parameters of a web app may be included in a manifest file in JSON format.

Each of the setting parameters of a web app can contain information about how the app's execution screen will be presented on the user interface.

A web app's manifest file can contain meta information that identifies a particular website as an application.

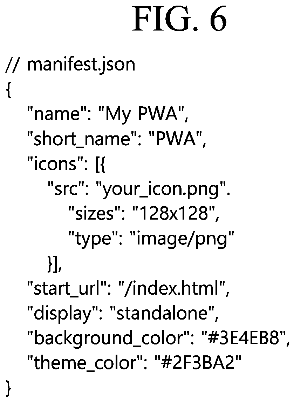

The manifest file of the web app is explained with reference to FIG. 6.

FIG. 6 is a view illustrating a manifest file of a web app including setup parameters of a web app according to one embodiment of the present disclosure.

Referring to FIG. 6, the setting parameters of the web app may include a name (name), a short name (short_name), an icon display location (src), an icon size (sizes), an icon file type (type), a start URL address (start_URL), a display property indicating how the app is executed (display), the app's background color (background_color), and the app's theme color (theme_color).

The name (name) is the name of the app, and the icon that identifies the app may be displayed with the name of the app.

The short name (short_name) is a shortened version of the app's name and may be used when there is not enough space to display the full name on the icon.

The display position (src) of the icon can indicate where the icon image will be displayed.

The icon size (sizes) can indicate the size of the icon image.

An icon's file type (type) can indicate what type of image the icon is.

The start URL address (start_URL) can be the URL address that starts when the app is executed.

Display properties are properties that indicate how the app executes, and can be one of full screen, standalone, minimal-ui, or browser.

The background color (background_color) of an app can represent the color displayed on the background when the app is executed.

The theme color (theme_color) of an app can represent the color that represents the app's theme when the app is executed.

In addition, the setting parameters of the web app may further include an display direction (orientation) indicating the display direction of the app execution screen, a URL bar item indicating whether a URL bar in which a URL address can be entered is displayed, and an nrcu (normal remote control unit) item indicating whether the remote control of the display device 100 can be used.

Again, FIG. 5 is explained.

Meanwhile, the setting parameters of the web app may be stored in memory 140.

In another embodiment, the setting parameters of the web app can be received from a web server.

In other words, when the controller 170 receives a request to execute a web app, the controller can transmit a request requesting web app setting parameters to a web server through the network interface 133 and receive a response including web app setting parameters in response to the request from the web server.

The app launcher 520 can change each setting parameter to a driving parameter of a matching web browser, and change the value of the setting parameter according to the environment of the display device 100 or the driving environment of the web browser.

The environment of the display device 100 may include the size of the display 180, the supported resolution, or the like.

In one embodiment, each of the plurality of setting parameters may match each of the plurality of driving parameters and may be the same parameter.

For example, the app launcher 520 can change the size of an icon, which is one of the setting parameters, to a new size to fit the screen size of the display 180.

The app launcher 520 transmits a web browser driving request including driving parameters to the app manager 510 (S509) and terminates the native app (S510).

The app launcher 520 can transmit a web browser request including driving parameters to the app manager 510 to drive the web browser. At the same time, the app launcher 520 can terminate the executed native app. This is to enable the PWA to be executed via the web browser.

The app manager 510 transmits a web browser driving request message including converted driving parameters to the web browser engine 530 in response to a web browser driving request (S511).

The web browser engine 530 executes the web browser based on the driving parameters included in the web browser operating request message (S513).

The web browser engine 530 can execute the web browser based on the driving parameters in which the setting parameters of the web app are converted to suit the environment of the web browser.

The web browser engine 530 can use the values of the driving parameters to determine the properties of the user interface to be displayed through the web browser.

In other words, the properties of the user interface can be determined by the values of the driving parameters.

The web browser engine 530 can determine whether to obtain a URL address and display a URL bar based on the values of the driving parameters.

The web browser engine 530 transmits a URL opening command to the renderer 540 according to the execution of the web browser (S515).

The web browser engine 530 can obtain a URL address using the start URL address parameter among the driving parameters and transmit a URL open command to open the obtained URL address to the renderer 540.

The renderer 540 loads a web page corresponding to the URL according to the URL open command (S517).

The renderer 540 may be responsible for drawing a website corresponding to a URL address.

The display 180 can display a website screen drawn by the renderer 540.

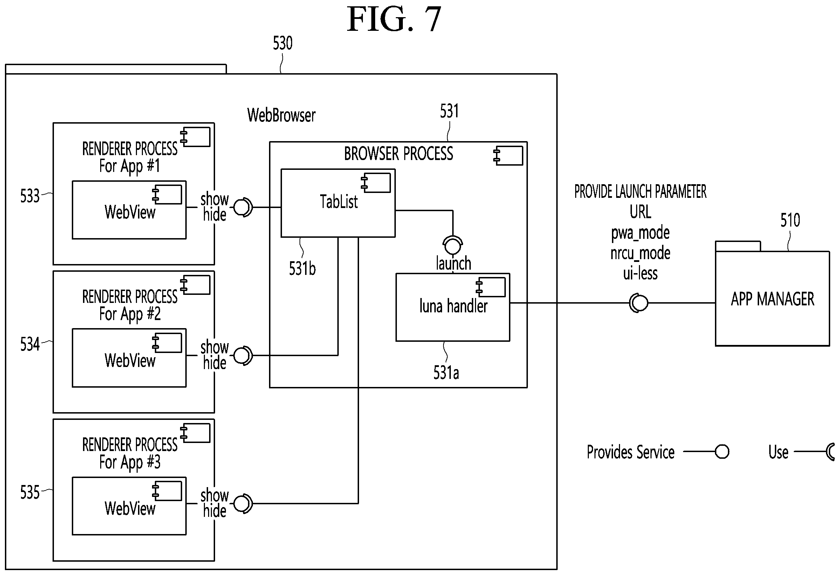

FIG. 7 is a view for explaining the operation of a web browser engine according to one embodiment of the present disclosure.

A web browser engine 530 may include a browser processor 531 and a plurality of renderer processors 533 to 535.

The browser processor 531 may include a Luna handler 531a and a tab list manager 531b.

The Luna handler 531a can provide a communication interface with the app manager 510.

The app manager 510 can transmit driving parameters to the Luna handler 531 of the web browser engine 530.

The driving parameters may include a start URL address, information on whether the remote control of the display device 100 is available, whether a URL bar is displayed, and information on whether to operate in PWA mode. The PWA mode may be a mode in which a web app is driven through a web browser.

The driving parameters may further include the name (name), short name (short_name), display location of the icon (src), size of the icon (sizes), file type of the icon (type), start URL address (start_URL), display property indicating how the app is executed (display), background color of the app (background_color), and theme color of the app (theme_color) corresponding to the setting parameters.

The tab list manager 531b can use information on whether to operate in PWA mode included in the driving parameters to determine whether to add the execution screen of the web app to the tab list.

The tab list manager 531b can display a separate web page without adding the execution screen of the web app to the tab list when operation in PWA mode is activated.

Each of a plurality of renderer processors 533 to 535 can manage a renderer process of a corresponding app. A renderer process is a process that manages an instance of a web view.

A web view can be responsible for loading web pages.

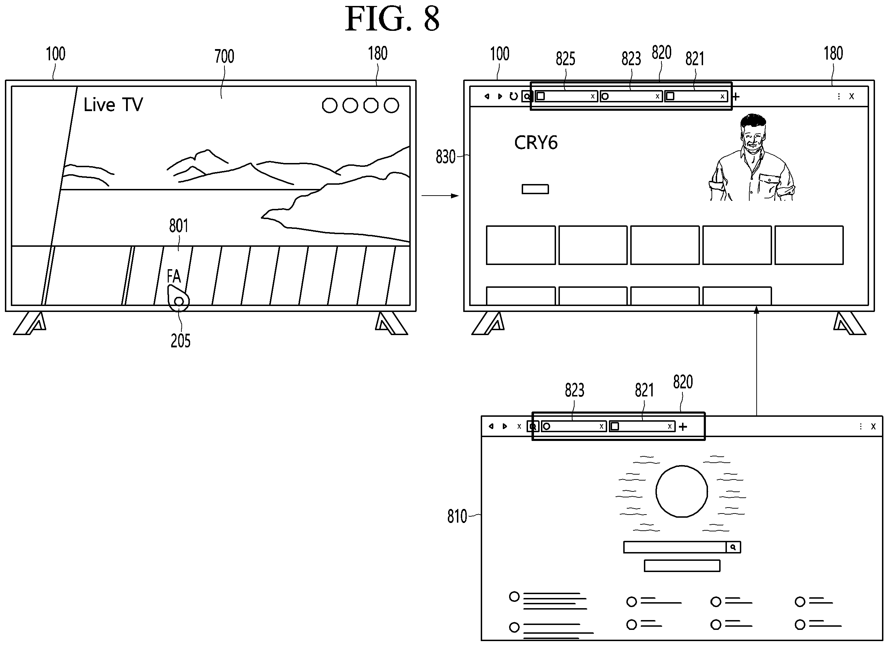

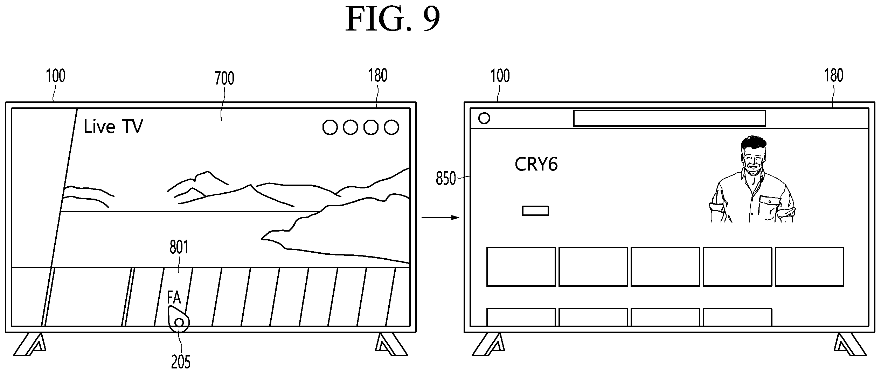

FIG. 8 is a view explaining an example in which a web page of a web app is added to a tab list on a web browser screen when an app is selected on a home screen according to a prior art, and FIG. 9 is a view explaining an example in which a separate web page is displayed without adding a new tab when an app is selected on a home screen according to an embodiment of the present disclosure.

Referring to FIG. 8, the display device 100 has a home screen (700) that includes a web app icon 801 corresponding to a web app.

When the display device 100 receives a command to select a web app icon 801 via the pointer 205, it can drive a web browser and display a web page 810 according to the driving of the web browser.

The existing tab list 820 included in the existing web page 810 includes a first tab 821 corresponding to the first website and a second tab 823 corresponding to the second website.

The display device 100 loads a web page 830 corresponding to the web app icon 801 in response to a command to select the web app icon 801, and adds a third tab 825 corresponding to the web page 830 to the tab list 820.

Next, FIG. 9 is described.

Fig. 9 may be a scenario to which the embodiment of Fig. 5 is applied.

When the display device 100 receives a command to select a web app icon 801 via the pointer 205, it can drive a web browser and display a separate web page 850 according to the driving of the web browser.

The display device 100 can convert the setting parameters of the web app corresponding to the web app icon 801 into driving parameters of the web browser upon receiving a command to select the web app icon 801.

The display device 100 can drive a web browser using the converted driving parameters and display a web page 850 accordingly.

The display device 100 may not only not add a tab corresponding to the web app to the existing tab list 820, but may also display a web page 850 generated through a separate renderer.

In this case, there are two steps: the Native App is driven internally, and then the web browser is driven, but from the platform's perspective, this has the effect of allowing older platforms to support PWA without adding a separate app type.

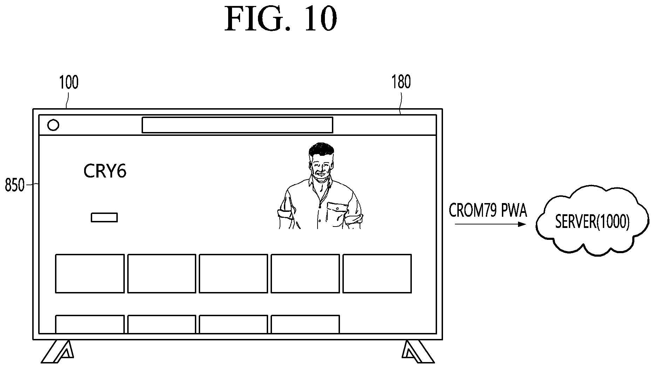

FIG. 10 is a view illustrating a communication process between a display device and a server providing an app service according to one embodiment of the present disclosure.

The network interface 133 of the display device 100 can communicate with the server 1000.

The server 1000 may be a server providing a service such as a game app and streaming app.

The display device 100 displays a web page 850 according to the execution of the web app.

When the display device 100 requests a resource from the server 1000 through a web page 850, it can transmit the name (CROM79) of the web browser executing the web app and user agent identification information (PWA) indicating that the app is executed through the web app (or PWA).

The server 1000 can transmit a response corresponding to a resource only to the display device 100 that transmitted the user agent identification information (PWA).

Service providing servers sometimes want to provide web app services through web browsers that they recognize.

According to an embodiment of the present disclosure, when a display device 100 transmits a resource to a server 1000, it transmits the name of a web browser and user agent identification information together, thereby enabling a service provider to identify that an app is being driven as a PWA type.

Accordingly, service providers can identify devices that can provide web app services through the web browsers they have set, and provide web app services only to the identified devices.

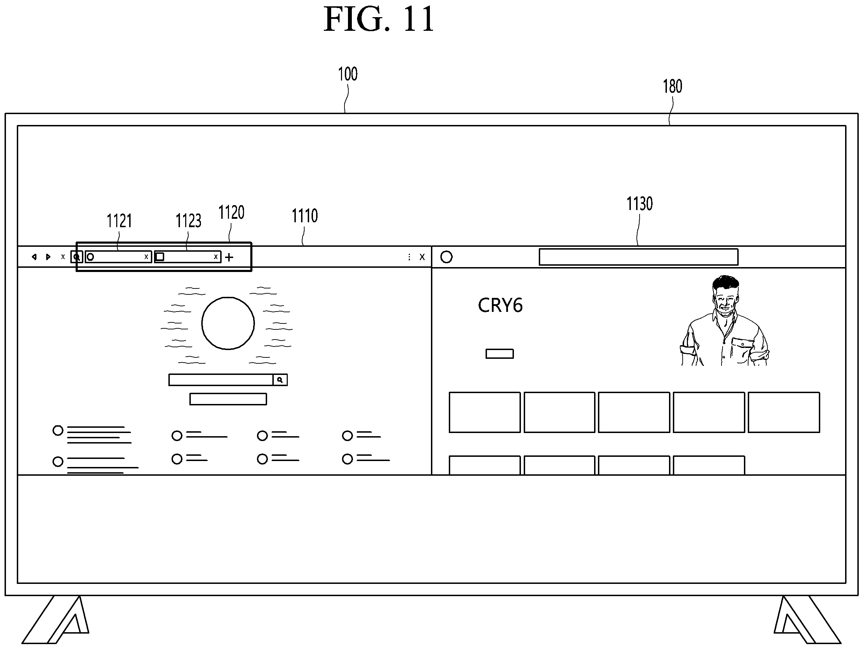

FIG. 11 is a view explaining handling when two web browser apps are run simultaneously in multi-view according to one embodiment of the present disclosure.

A web browser app may be an app that drives a web browser installed on a display device 100.

When the display device 100 receives a web browser app and a web app execution command included in the home launcher (or home screen), it can display a first web page 1110 and a second web page 1130 in the form of a multi-view, as illustrated in FIG. 11.

The first web page 1110 may be a page loaded upon execution of a web browser app, and the second web page (1130) may be a page loaded through a web browser upon execution of a web app.

A first web page 1110 may include a tab list 1120 including a first tab 1121 and a second tab 1123.

In other words, the display device 100 can display the web page of the web app separately even when the web browser app and the web app are driven simultaneously.

Accordingly, users can view the execution screen of the web app on a separate screen, separate from the execution of the web browser app.

According to one embodiment of the present disclosure, the above-described method can be implemented as a processor-readable code on a medium in which a program is recorded. Examples of the processor-readable medium include a ROM, a RAM, a CD-ROM, a magnetic tape, a floppy disk, an optical data storage device, and the like.

The display device described above is not limited to the configuration and method of the embodiments described above, and the embodiments may be configured by selectively combining all or part of the embodiments so that various modifications can be made.

## Claims

1. A display device comprising:
a display;
a user interface that performs communication with a remote control device; and
a controller that receives an app execution request from the remote control device, converts setting parameters of a web app into driving parameters for driving a web browser according to the received request, executes the web browser based on the converted driving parameters, and displays a web page of the web app on the display through the executed web browser.

2. The display device of claim 1,
wherein the setting parameters of the web app include meta information for recognizing the web page as an app.

3. The display device of claim 2,
wherein the setting parameters include
a name of the web app, an icon representing the web app, a size of the icon, a position of the icon, a start URL address, a URL bar item indicating whether the URL bar is displayed, and an item indicating whether control via the remote control device is possible.

4. The display device of claim 3,
wherein the controller changes the values of the setting parameters to suit the environment of the display.

5. The display device of claim 1,
wherein the controller executes a native app according to the app execution request, executes the web browser based on the converted driving parameters, and then terminates the native app.

6. The display device of claim 1,
wherein the controller displays the web page separately without adding the web page of the web app to a tab list on the web page of the previously executed web browser.

7. The display device of claim 1, further comprising:
a network interface that performs communication with a server providing an app service,
wherein the controller transmits to the server the name of the web browser executing the web app through the network interface and user agent identification information indicating that the app is executing through the web app.

8. The display device of claim 1,
wherein the controller simultaneously displays a web page according to the execution of the web browser app and a web page of the web app in a multi-view format when receiving a web browser app and an execution command of the web app.

9. A method for operating a display device, comprising:
receiving an app execution request from a remote control device;
converting setting parameters of a web app into driving parameters for driving a web browser according to the received request;
executing a web browser based on the converted driving parameters; and
displaying a web page of the web app through the executed web browser.

10. The method for operating a display device of claim 9,
wherein the setting parameters of the web app include meta information for recognizing the web page as an app.

11. The method for operating a display device of claim 10,
wherein the setting parameters include
a name of the web app, an icon representing the web app, a size of the icon, a position of the icon, a start URL address, a URL bar item indicating whether the URL bar is displayed, and an item indicating whether control via the remote control device is possible.

12. The method for operating a display device of claim 11,
wherein the converting includes changing the values of the setting parameters to suit the environment of the display.

13. The method for operating a display device of claim 9, further comprising:
executing a native app according to the app execution request; and
executing the web browser based on the converted driving parameters, and then terminating the native app.

14. The method for operating a display device of claim 9,
wherein the displaying includes displaying the web page separately without adding the web page of the web app to a tab list on the web page of the previously executed web browser.

15. The method for operating a display device of claim 9, further comprising:
transmitting to the server the name of the web browser executing the web app through the network interface and user agent identification information indicating that the app is executing through the web app.
